(19) **Europäisches Patentamt**

**European Patent Office**

**Office européen des brevets**

(11) **EP 0 543 915 B1**

(12) **EUROPEAN PATENT SPECIFICATION**

(45) Date of publication and mention
of the grant of the patent:
**04.03.1998 Bulletin 1998/10**

(51) Int Cl.$^6$: **G06T 7/20**, H04N 7/12,
H04N 7/36

(21) Application number: **91915636.4**

(86) International application number:
**PCT/SE91/00529**

(22) Date of filing: **12.08.1991**

(87) International publication number:
**WO 92/03799 (05.03.1992 Gazette 1992/06)**

(54) **METHOD OF MOTION COMPENSATION AND ELASTIC DEFORMATION IN PICTURE SEQUENCES**

VERFAHREN ZUM BEWEGUNGSAUSGLEICH UND ELASTISCHER VERFORMUNG IN BILDREIHEN

PROCEDE DE COMPENSATION DES MOUVEMENTS ET DE DEFORMATION ELASTIQUE DANS DES SEQUENCES D'IMAGE

(84) Designated Contracting States:
**BE CH DE FR GB LI NL**

(30) Priority: **15.08.1990 SE 9002647**

(43) Date of publication of application:
**02.06.1993 Bulletin 1993/22**

(73) Proprietor: **TELEVERKET**
**123 86 Farsta (SE)**

(72) Inventor: **BRUSEWITZ, Harald**
**S-123 86 Farsta (SE)**

(74) Representative: **Karlsson, Berne**
**Telia Research AB,**
**Koncernpatent**
**136 80 Haninge (SE)**

(56) References cited:
**EP-A- 0 280 316**          **US-A- 4 661 849**

EP 0 543 915 B1

**Description**

FIELD OF THE INVENTION

The present invention relates to a method of motion compensation and elastic deformation in the picture sequences, that is a picture coding method in which the pixel values in a picture are determined using the previous picture. It is assumed that the motion between two successive pictures is known, that is the motion vector field is known. The motion may include both translation and deformation.

STATE OF THE ART

It is previously known to use motion vector fields for picture coding. In this connection, the picture is divided into rectangular blocks. In this division, problems may occur with visible squares in the picture sequence because of discontinuities at the edges of the block. US-A-4,661,849 discloses a method of motion compensation in which the picture is divided into non-overlapping regions, motion vectors in those regions are established by estimation and transmitted from the transmitter to the receiver, the motion vectors of particular points are then interpolated in the receiver using the motion vectors at surrounding points and the pixel values are calculated using the previous picture information. The method according to that disclosure, however, does not solve the problem of avoiding the present discontinuities at the block boundaries. According to the present invention, this problem is solved by the features specified in claim 1.

SUMMARY OF THE INVENTION

Thus, the present invention provides a method of motion compensation and elastic deformation in picture sequences in transmission of moving pictures between a transmitter and a receiver. According to the invention, each picture in a picture sequence is divided into triangles and the motion between two successive pictures is estimated such that the motion vectors in the corner points of the triangles can be determined. Information about the corner points and/or the motion vectors is transmitted from the transmitter to the receiver. In the receiver the motion vectors of the internal points of the triangles are calculated using the three transmitted motion vectors associated with the respective triangle. The pixel values of the corner points of the respective triangles are calculated using the transmitted motion vectors and the previous picture and the internal pixel values are calculated using the calculated motion vectors and the previous picture.

Further features of the invention are set forth in detail in the accompanying claims.

BRIEF DESCRIPTION OF THE DRAWINGS

The drawing is a schematic illustration of two successive pictures in which corresponding triangles have been drawn and the respective motion vectors, in which

figure 1. shows translation,
figure 2. rotation and
figure 3. deformation.

The invention is described below in detail.

DETAILED DESCRIPTION OF A PREFERRED EMBODIMENT OF THE INVENTION

The purpose of the invention is to enable transmission of picture sequences by starting from one picture and only transmit motion vectors. There already exists methods of dividing the pictures in rectangular blocks and of determining the motion vectors applying within the blocks. A problem is that square blocks then may become visible in the picture because of discontinuities in the motion vector field between adjacent blocks.

According to the present invention the picture is divided into triangles instead. The division may be fixed or may be adapted to the picture in question and the motion therein. When the corner points of each triangle are established the motion vectors in the corner points are determined relative to the previous picture in the sequence. Motion vectors are assigned to points within each triangle by interpolating the motion vectors in the corner points. Thus, contiguous triangles have the same motion vectors along the whole common side. Thereby no discontinuities occur.

The pixel values are obtained from the previous picture using the motion vector fields obtained in this way. Generally, the motion vectors indicate undefined points in the previous picture. The pixel value is then obtained using an interpolation filter, preferably in accordance with our publ. date 8 may 1991 co-pending patent application titled "Method of moving a pixel a subpixel distance". (SE,B,465 188)

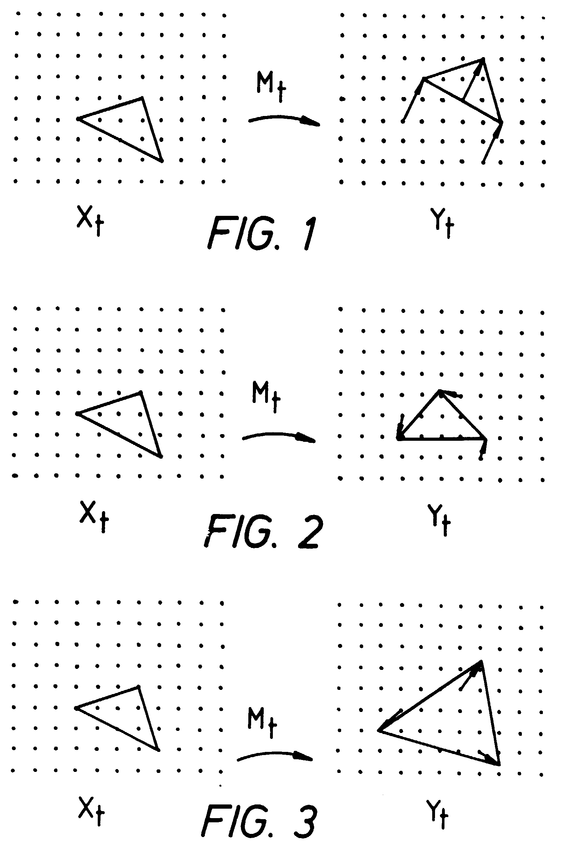

In the figures, various ways of how a triangle can be moved are shown. Figure 1 shows a translation, figure 2 a rotation and figure 3 a deformation, in this case an enlargement. Normally, the movement of the triangle is a combination of these three basic types. The co-ordinates of the new triangle can be expressed in matrix form as

$$Y_t = X_t + M_t$$

where $X_t$ is the co-ordinates of the old triangle, $Y_t$ is the new triangle and $M_t$ contains the three motion vectors.

Any point $(x, y)$ may be expressed using the position vectors of the triangel $X_t$. Define a triangle having three corner points

$$X_t = \begin{pmatrix} x_1 & y_1 \\ x_2 & y_2 \\ x_3 & y_3 \end{pmatrix}$$

Create a base of vectors $v_1$, $v_2$, $v_3$ using the corner points.

$$\begin{pmatrix} v_1 \\ v_2 \\ v_3 \end{pmatrix} = \begin{pmatrix} x_1 & y_1 \\ x_2-x_1 & y_2-y_1 \\ x_3-x_2 & y_3-y_2 \end{pmatrix}$$

Then an arbitrary point in the picture plane can be expressed as

$$(x, y) = v_1 + av_2 + bv_3$$

For points within the triangle $X_t$ the following relations apply

$$0 \leq a \leq 1 \text{ and } 0 \leq b \leq a.$$

For a given point $(x, y)$ $a$ and $b$ can be calculated with the formulas

$$a = \frac{(x-x_1)(y_3-y_2) - (y-y_1)(x_3-x_2)}{(x_2-x_1)(y_3-y_2) - (y_2-y_1)(x_3-x_2)}$$

$$b = \frac{(x-x_2)(y_2-y_1) - (y-y_1)(x_2-x_1)}{(x_3-x_2)(y_2-y_1) - (y_3-y_2)(x_2-x_1)}$$

A set of positions $X$ may be expressed as

$$X = BX_t$$

where each line of $X$ is a position $(x_i, y_i)$ and

$$B = \begin{pmatrix} \cdot & \cdot & \cdot \\ \cdot & \cdot & \cdot \\ \cdot & \cdot & \cdot \\ 1-a_i & a_i-b_i & b_i \\ \cdot & \cdot & \cdot \\ \cdot & \cdot & \cdot \\ \cdot & \cdot & \cdot \end{pmatrix}$$

Several triangles can be processed at the same time with a matrix $X_t$ containing all the triangle corners involved. With a number of corners = nc:

$$X_t = \begin{pmatrix} x_1 & y_1 \\ x_2 & y_2 \\ \cdot & \cdot \\ \cdot & \cdot \\ \cdot & \cdot \\ x_{nc} & y_{nc} \end{pmatrix}$$

Then B is modified such that each line has nc positions and the values $1-a_i$, $a_i-b_i$ and $b_i$ are placed in the positions correspondning to the corner point that is to be used. All other positions are zero.

A continouos motion vector field in the triangle $Y_t$ is obtained if the motion vectors are calculated as

$$M = BM_t$$

where the positions in question within the respective triangle are inserted in B.

The triangle division of the picture is performed in the transmitter and the corner points of the triangles are established. Thereafter, the motion vectors and the corner points are established. First, a complete picture is transmitted between the transmitter and receiver. Thereafter, only motion vectors and information about the corner point associated with each motion vector are transmitted. In the receiver the motion vector of every point in the picture is calculated by interpolation of the motion vectors in the corner point (that is by the formula $M = BM_t$). Thereafter, all the pixel values can be calculated using the motion vectors and the previous picture.

Thus, the present invention provides a method of motion compensation and elastic deformation in picture sequences which solves the above problem with discontinuities between blocks in the picture. The invention is defined in the accompanying claims.

**Claims**

1. Method of motion compensation and elastic deformation in picture sequences in transmission of moving pictures between a transmitter and a receiver, **characterized** in that

   in the transmitter, each picture in a picture sequence is divided into triangles by suitable choice of corner points, the motion between two successive pictures is estimated, and the motion vectors in all the corner points are established,
   information about the motion vectors and, if necessary, the corner points is transmitted from the transmitter to the receiver, and
   in the receiver, the motion vectors of the internal points of the triangles are calculated using the three transmitted motion vectors of the respective triangle, which motion vectors M are calculated as $M = BM_t$, where B is a matrix in which the positions in question within the respective triangle are inserted and $M_t$ contains the three motion vectors,

the pixel values of the corner points of the triangles are calculated using the transmitted motion vectors and the previous picture, and

the pixel values of the internal points of the triangles are calculated using the calculated motion vectors and the previous picture.

2. Method according to claim 1, **characterized** in that the motion vectors of the internal pixels of the triangles are calculated by interpolation.

## Patentansprüche

1. Verfahren zum Bewegungsausgleich und zur elastischen Verformung in Bildreihen bei der Übertragung von bewegten Bildern zwischen einem Sender und einem Empfänger, dadurch gekennzeichnet, daß

im Sender jedes Bild in einer Bildreihe in Dreiecke durch geeignete Wahl von Eckpunkten aufgeteilt wird, die Bewegung zwischen zwei aufeinanderfolgenden Bildern geschätzt wird und die Bewegungsvektoren in allen Eckpunkten gebildet werden;

Information über die Bewegungsvektoren und falls notwendig die Eckpunkte vom Sender zum Empfänger übertragen wird; und

im Empfänger die Bewegungsvektoren der Innenpunkte der Dreiecke unter Verwendung der drei übertragenen Bewegungsvektoren des entsprechenden Dreiecks berechnet werden, welche Bewegungsvektoren M als $M = BM_t$ berechnet werden, wobei B eine Matrix ist, in der die fraglichen Positionen innerhalb des entsprechenden Dreiecks eingesetzt sind und $M_t$ die drei Bewegungsvektoren enthält,

die Pixelwerte der Eckpunkte des Dreiecks unter Verwendung der übertragenen Bewegungsvektoren und des vorhergehenden Bildes berechnet werden, und

die Bildwerte der Innenpunkte des Dreiecks unter Verwendung der berechneten Bewegungsvektoren und des vorhergehenden Bildes berechnet werden.

2. Verfahren nach Anspruch 1, dadurch gekennzeichnet, daß die Bewegungsvektoren der inneren Pixel der Dreiecke durch Interpolation berechnet werden.

## Revendications

1. Procédé de compensation des mouvements et de déformation élastique dans des séquences d'images lors de la transmission d'images en mouvement entre un émetteur et un récepteur, caractérisé en ce que :

dans l'émetteur, on subdivise chaque image d'une séquence d'images en triangles grâce à un choix approprié de sommets, on estime le mouvement entre deux images successives, et on établit les vecteurs du mouvement sur tous les sommets,

les informations relatives aux vecteurs de mouvement, et si nécessaire aux sommets, sont transmises de l'émetteur au récepteur, et

dans le récepteur, les vecteurs de mouvement des points intérieurs des triangles sont calculés par utilisation des trois vecteurs de mouvement transmis du triangle considéré, lesquels vecteurs de mouvement M sont calculés par $M = BM_t$, où B est une matrice dans laquelle sont insérées les positions considérées à l'intérieur du triangle considéré, et $M_t$ contient les trois vecteurs de mouvement,

les valeurs des pixels des sommets des triangles sont calculées par utilisation des vecteurs de mouvement transmis et de l'image précédente, et

les valeurs des pixels des points intérieurs des triangles sont calculées par utilisation des vecteurs de mouvement calculés et de l'image précédente.

2. Procédé selon la revendication 1, caractérisé en ce que les vecteurs de mouvement des pixels intérieurs des triangles sont calculés par interpolation.

$X_t$     $M_t$     $Y_t$

*FIG. 1*

$X_t$     $M_t$     $Y_t$

*FIG. 2*

$X_t$     $M_t$     $Y_t$

*FIG. 3*